Europäisches Patentamt

European Patent Office

Office européen des brevets

(19)

(11) Veröffentlichungsnummer: **0 268 621**
**B1**

(12) **EUROPÄISCHE PATENTSCHRIFT**

(45) Veröffentlichungstag der Patentschrift: **01.08.90**

(51) Int. Cl.⁵: **F 16 L 23/00**

(21) Anmeldenummer: **87903258.9**

(22) Anmeldetag: **29.05.87**

(86) Internationale Anmeldenummer:
**PCT/DE87/00249**

(87) Internationale Veröffentlichungsnummer:
**WO 87/07700 17.12.87 Gazette 87/28**

(54) **ZUM VERBINDEN VON LUFTKANALTEILSTÜCKEN DIENENDES FLANSCHPROFIL.**

(30) Priorität: **04.06.86 DE 3618822**

(43) Veröffentlichungstag der Anmeldung:
**01.06.88 Patentblatt 88/22**

(45) Bekanntmachung des Hinweises auf die
Patenterteilung:
**01.08.90 Patentblatt 90/31**

(84) Benannte Vertragsstaaten:
**AT BE CH DE FR GB IT LI NL SE**

(56) Entgegenhaltungen:
**DE-A-3 436 825**
**DE-C-3 207 990**
**DE-C-3 214 693**

(73) Patentinhaber: **SCHAUER, Markfried**
**Am Vogelbrink 3**
**D-3013 Barsinghausen (DE)**

(72) Erfinder: **SCHAUER, Markfried**
**Am Vogelbrink 3**
**D-3013 Barsinghausen (DE)**

(74) Vertreter: **Habbel, Hans-Georg, Dipl.-Ing.**
**Postfach 3429 Am Kanonengraben 11**
**D-4400 Münster (DE)**

EP 0 268 621 B1

## Beschreibung

Die Erfindung bezieht sich auf ein zum Verbinden von Luftkanalteilstücken dienendes Flanschprofil gemäß dem Oberbegriff des Hauptanspruches.

Eine gattungsbildende Einrichtung wird in der DE—A—34 36 825 beschrieben.

Bei dieser bekannten Anordnung wird der untere Profilbereich des Flanschprofils mit einer Sicke versehen, die einen Aufnahmeraum für eine Dichtmasse schaffen soll. Diese Dichtmasse ist dauerplastisch und kann also beim Transport der Flanschprofile ausfließen. Das Einführen der Kanalwand in den Raum zwischen den beiden Profilbereichen ist schwierig und nur möglich, indem die Kanalwand zuerst angewinkelt und in die Dichtmasse eingestoßen wird, so daß dadurch von der einzuschiebenden Kanalwand Dichtmasse aus der Sicke herausgeführt wird. Hierbei verschmiert die Kanalwand und behindert dadurch die anschließend erforderliche punktschweißung, so daß im Bereich der Punktschweißung keine feste und sichere Verbindung geschaffen wird.

Eine weitere Vorrichtung zum Verbinden von Luftkanalelementen wird in der DE—C—32 07 990 beschrieben. Hier hat man in dem in dem unteren Profilbereich parallel zur Vorderrandkante des Profilbereiches verlaufende Sicken vorgesehen, um damit Verwerfungen beim Punktschweißen zu vermeiden. Eine Abdichtung wird durch diese Formgebung nicht erreicht.

In der DE—C—32 14 693 wird eine Vorrichtung zum Verbinden von Kanalteilstücken für Klimaanlagen beschrieben, die aber nicht dem Oberbegriff des geltenden Patentanspruches entspricht. Hier wird, um eine hohe Stabilität und eine einfache Vormontage der Einzelteile zu erreichen, vorgeschlagen, daß die Profile Vorsprünge, Falze, Sicken oder Abbiegungen aufweisen.

Der Erfindung liegt die Aufgabe zugrunde, ein Flanschprofil zum Verbinden von Luftkanalteilstücken zu schaffen, bei welchem gewährleistet ist, daß der das Blech des Luftkanalteilstücks untergreifende Profilbereich luftdicht gegen die Wand des Luftkanalteilstücks abgedichtet wird, unabhängig davon, ob die Stirnkanten der Luftkanalteilstücke in einer Ebene liegen, wobei die Abdichtung automatisch beim Ansetzen der Flanschprofile an die Luftkanalteilstücke erzielt werden soll.

Diese der Erfindung zugrundeliegende Aufgabe wird durch die Lehre des Hauptanspruches gelöst.

Wesentlich bei der erfindungsgemäßen Anordnung ist, daß die Dichtung bereits im Herstellungsverfahren für das Flanschprofil mit eingewalzt werden kann und daß sie sich im Unterschied zu der Dichtung gemäß der DE—C—34 36 825 nicht am vorderen freien Ende befindet, sondern in Nähe des Aufnahmeraumes für die Eckwinkel.

Dies hat folgenden Vorteil:

Wenn die beiden Profilbereiche, zwischen denen die Wand des Luftkanalteilstückes eingeschoben wird, über Punktschweißelektroden miteinander verbunden werden, kann es auftreten, daß sich die beiden Enden der Profilbereiche wölben und daß hier trotz der vorgesehenen Dichtung Undichtigkeiten auftreten. Liegt aber die Dichtung nahe im Bereich des Aufnahmeraumes für den Eckwinkel, kann trotz der durchgeführten Punktschweißverbindung eine Verwerfung der Wandteile nicht mehr auftreten, d. h. trotz der durchgeführten Punktschweißverbindung ist bei eingeschobener Wand eine ausreichende und über die ganze Länge des Flanschprofiles verlaufende Abdichtung gewährleistet.

Ein Ausführungsbeispiel der Erfindung wird nachfolgend anhand der Zeichnung erläutert. Die Zeichnung zeigt dabei in

Fig. 1 eine schaubildliche Ansicht auf zwei zu sammengefügte Luftkanalteilstücke, in

Fig. 2 als Beispiel zur Verdeutlichung der Punktschweißverbindung ein nicht erfindungsgemäß ausgebildetes Flanschprofil und in

Fig. 3 das erfindungsgemäß ausgebildete Flanschprofil.

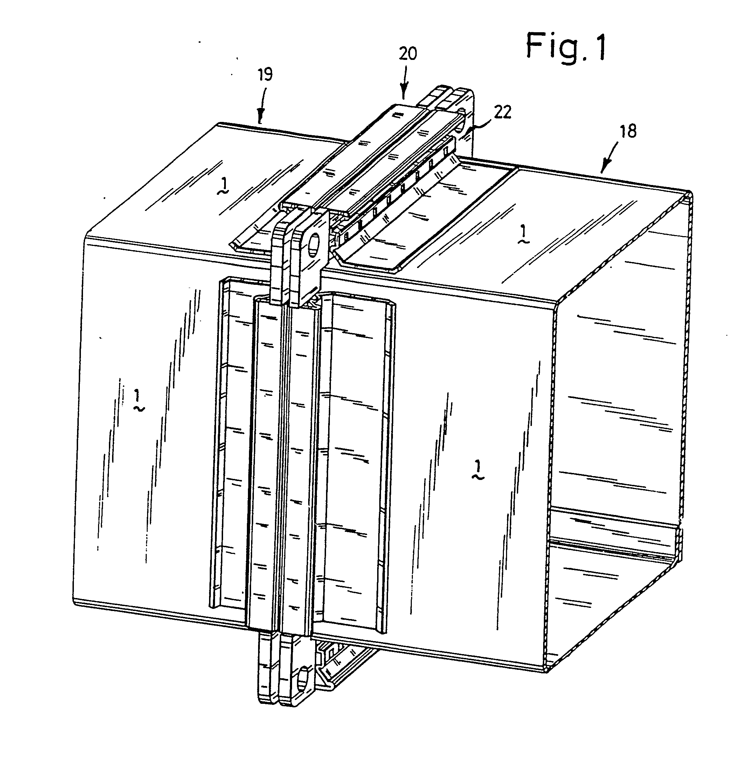

In Fig. 1 sind mit 1 die Wände von Luftkanalteilstücken 18 und 19 bezeichnet. Auf die freien Stirnenden dieser Wände 1 sind Flanschprofile 20 aufgesetzt, die über Eckwinkel 22 miteinander verbunden sind.

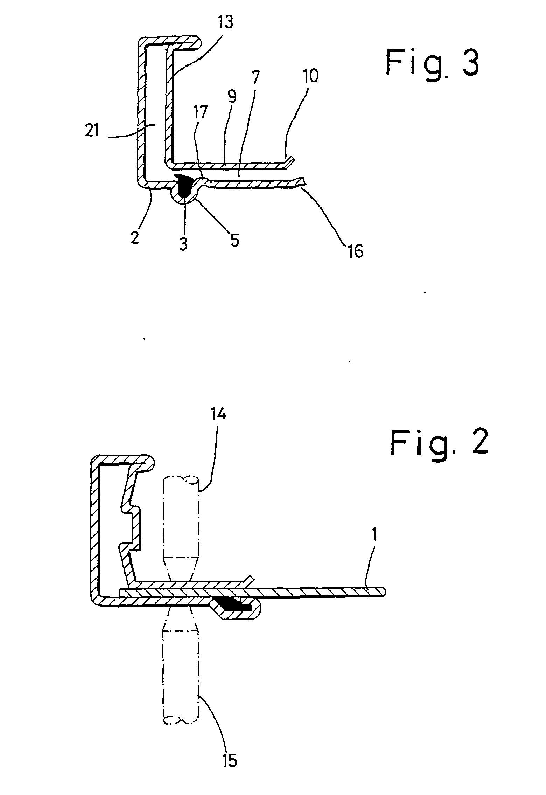

Fig. 2 zeigt das Flanschprofil 20 mit aufgesetzten Punktschweißelektroden 14 bzw. 15, die bei 7 eine Punktschweißverbindung erzeugen. Hierdurch wird die eingeschobene Wand 1 festgelegt.

Gemäß Fig. 3 liegt eine Dichtung 3 in einer Sicke 5 des Profilbereiches 2, der stirnseitig der Punktschweißverbindung 7 angeordnet ist. Das Ende des Profilbereiches 2 weist eine Abkantung 16 nach oben auf, wobei der Endpunkt der Abkantung 16 und eine Erhebung 17 in einer Ebene liegen, um somit eine parallele Lage einer eingeschobenen Wand 1 des Luftkanalteilstückes 18 bzw. 19 zu den Profilbereichen 2 und 9 zu gewährleisten.

Zusätzlich schützt die Erhebung 17 die Dichtung 3 beim Einschieben der Wand 1 des Luftkanalteilstückes 18 bzw. 19. Ein Einführungtrichter für die Wand 1 des Luftkanalteilstückes 18 bzw. 19 wird durch die abgewinkelte Kante 10 des Profilbereiches 9 durch die geringere Abkantung 16 des Profilbereiches 2 gebildet.

Der Aufnahmeraum für den Eckwinkel 22 ist in Fig. 3 mit 21 bezeichnet, wobei dieser Raum 21 in Richtung auf die freien Enden der Profilbereiche 2 und 9 durch eine Wand 13 begrenzt ist.

## Patentanspruch

Zur Verbindung von Luftkanalteilstücken (18, 19) dienendes Flanschprofil (20), das Aufnahmeräume (21) für Eckwinkel (22) bildet, wobei das Flanschprofil (20) zum Über- und Untergreifen der Wände (1) der Kanalteilstücke (18, 19) einerseits und zur Bildung der Aufnahmeräume (21) für die Eckwinkel (22) andererseits als doppelwandiges querschnittlich im wesentlichen L-förmiges Metallprofil ausgebildet ist und der Wandverlauf der einzelnen, die Wände (1) der Luftkanalteilstücke (18, 19) unter- und übergreifenden Profilbereiche (2, 9) im Abstand zueinander im wesentlichen parallel verlaufen und in dem unter der Wand (1) liegenden Profilbereich (2) eine durch Formung des Profilbereiches (2) geschaffene Sicke (5) als Aufnahmeraum für eine über die Ebene der inneren Oberseite des Profilbereiches (2) vorstehende Dichtung (3) vorgesehen ist, dadurch gekennzeichnet, daß

a) die Dichtung (3) aus einem elastomeren Werkstoff besteht,

b) die Dichtung (3) in den Aufnahmeraum bei der Profilierung des Aufnahmeraumes mit eingewalzt ist,

c) der übergreifende Profilbereich (9) an seinem freien Ende eine nach außen abgewinkelte Kante (10) aufweist,

d) die Vorderkante der Sicke (5) als Erhebung (17) nach oben gegenüber der inneren Oberseite des untergreifenden Profilbereiches (2) versetzt ist und

e) die Sicke (5) nahe der Wand (13) stirnseitig der Punktschweißverbindung (7) angeordnet ist.

## Revendication

Profilé de bride (20) servant pour raccorder des tronçons de gaine d'air (18, 19), qui forme des logements (21) pour recevoir des équerres (22), le profilé de bride (20) constituant un profilé métallique à double paroi et présentant sensiblement la forme d'un L en section transversale, d'une part, pour recevoir au-dessus et au-dessous les parois (1) des tronçons de gaine (18, 19) et, d'autre part, pour former les logements (21) servant à recevoir les équerres (22), et les profils des régions (2, 9) du profilé qui reçoivent les parois (1) des tronçons de gaine d'air (18, 19) s'étendant sensiblement parallèlement l'un à l'autre, à un certain écartement l'un de l'autre, une moulure (5) étant prévue dans la région (2) du profilé qui se trouve sous la paroi (1), et étant formée par façonnage de la région (2) du profilé, pour servir de logement pour un élément d'étanchéité (3) qui fait saillie au-dessus du plan de la face supérieure interne de la région (2) du profilé, caractérisé en ce que:

a) l'élément d'étanchéité (3) est fait d'une matière élastomère;

b) l'élément d'étanchéité (3) est logé dans le logement par moletage au cours du profilage de ce logement;

c) la région (9) du profilé qui s'engage au-dessus de la paroi présente à son extrémité libre un bord (10) cambré vers l'extérieur;

d) le bord avant de la moulure (5) est déporté vers le haut par rapport à la face supérieure interne de la région (2) du profilé qui reçoit la paroi par dessous, pour former un'e saillie (17); et

e) la moulure (5) est prévue à proximité de la paroi (13) en avant de la liaison soudée par point (7), en allant vers l'extrémité frontale.

## Claim

A flanged member (20) serving to connect air duct segments (18, 19) and forming the receiving spaces (21) for corner angles (22), the flanged member (20) being constructed as a double-walled, cross-sectionally substantially L-shaped metal member on the one hand for gripping the walls (1) of the duct segments (18, 19) from above and below and on the other hand for forming the receiving spaces (21) for the corner angles (22), the walls of the individual member areas (2, 9) which grip the walls (1) of the air duct segments (18, 19) from above and below running at a distance from each other and in substantially parallel manner, and a recess (5) being created in the member area (2) lying below the wall (1) by the shaping of the member area (2) to act as a receiving space for a seal projecting beyond the plane of the inner and upper side of the member area (2) characterized in that

a) the seal (3) consists of an elastomeric material,

b) the seal (3) is rolled into the receiving space during shaping of the receiving space,

c) the member area (9) gripping from above comprises an outwardly bent edge (10) at its free end,

d) the front edge of the recess (5) is arranged as an upwards elevation (17) with respect to the inner and upper side of the member area (2) gripping from below, and

e) the recesss (5) is arranged near the wall (13) in front of the spot-weld connection (7).

Fig.1

Fig. 3

Fig. 2